# EUROPEAN PATENT SPECIFICATION

(11) **EP 2 877 724 B1**
(45) Date of publication and mention of the grant of the patent: **17.10.2018**
(21) Application number: 12740129.7
(22) Date of filing: 24.07.2012
(51) Int. Cl.: F02C 1/04, F02C 6/18, F23C 9/08

(54) **SOLID BIOMASS-FUELLED GAS TURBINE SYSTEM**
MIT FESTER BIOMASSE BEFEUERTES GASTURBINENSYSTEM
SYSTÈME DE TURBINE À GAZ ALIMENTÉ PAR BIOMASSE SOLIDE

(43) Date of publication of application: 03.06.2015
(73) Proprietor: Schmid AG - Energy Solutions, 8360 Eschlikon (CH)
(72) Inventor: SCHMID, Roland, CH-8360 Eschlikon (CH); VOGEL, Dietrich, CH-8406 Winterthur (CH)
(74) Representative: Troesch Scheidegger Werner AG
(86) International application number: PCT/EP2012/064464
(87) International publication number: WO 2014/015894

(56) References cited:
- EP-A1- 1 416 224
- WO-A1-2007/124592
- DE-U1-202005 018 849
- GB-A- 2 274 880
- US-A- 5 158 025

## Description

The present invention relates to a solid biomass-fuelled gas turbine system, a corresponding method of operating a gas turbine, and a method of generating electrical power based on the method of operating a gas turbine.

In recent years, biomass-fuelled combined heat and power systems (CHP systems) have become common for industrial, commercial, and residential use, for instance for powering and heating a factory, office building, or residential properties. This is particularly advantageous in cases where a cheap source of biomass is present, for instance wood shavings, wood chips, straw, paper waste and so on. Such CHP systems can have extremely high thermodynamic efficiencies, and thus economically interesting as an alternative or a supplement to grid-based electrical power and electric, gas, or oil-based heating.

A typical solid biomass-fuelled CHP system operating on an Indirectly Fired Gas Turbine cycle comprises a combustion chamber, a compressor for compressing atmospheric air, a primary heat exchanger for exchanging heat between combustion gases generated in the combustion chamber and the compressed air (thus heating the compressed air and cooling the combustion gases), and a turbine operated by the thus heated compressed air. The shaft of this turbine typically operates a generator for generating electrical power, and furthermore the turbine shaft typically operates the compressor. Heat is typically recovered from the cooled combustion gases and/or from the air exiting the turbine by passing it through one or more further heat exchangers so as to exchange heat with water, which can then be used for heating of buildings or for raising steam.

Typically, the efficiency of such a system is limited by the material constraints of the primary heat exchanger: overheating can cause damage to the material of the heat exchanger and thus a low service life. However, for high turbine efficiency, high temperatures are preferred. Controlling the combustion of the biomass fuel so as to achieve efficient combustion and yet to keep the combustion gases at temperatures which will not cause deterioration of the primary heat exchanger presents significant difficulties.

DE 20 2005 018 849 U1 describes an attempt to mitigate this problem in an indirectly-fired gas turbine system of the above-mentioned type. Solid biomass fuel, fresh air, and turbine exhaust air are fed to a combustion chamber, and the biomass is burnt therein. An unspecified portion of the thus generated combustion gases pass through a heat exchanger and exchange heat with compressed air that is then fed to a turbine. An unspecified portion of the combustion gases are separated off after the heat exchanger and are fed back into the combustion chamber so as to reduce the proportion of oxygen therein and thereby to reduce the burning temperature. However, this system is complex and dependent on many parameters, and no indication is given as to how much combustion gas should be fed back into the combustion chamber to achieve the desired result. The object of the present invention is to propose a gas turbine system providing an adjustable improvement of the total thermodynamic efficiency of the system.

This object is achieved by a gas turbine system according to claim 1.

This results in a simple system in which varying the proportion of the combustion gases fed back into the combustion chamber between 30% and 60% enables the combustion temperature to be controlled by the amount of cooler fed-back combustion gas in the combustion chamber and thereby to achieve the desired temperature of combustion gases in the first heat exchanger. Furthermore, the feedback of combustion gas permits to increase the volumetric flow of combustion gas passing through the first heat exchanger compared with no such feedback, which improves the heat transfer in the first heat exchanger, improving the total thermodynamic efficiency of the system. Still further, in the case in which the air for combustion in the combustion chamber is supplied by utilising a proportion of the turbine exhaust air (i.e. air which has left the turbine exhaust), since a portion of the turbine exhaust air has been replaced by combustion gas, a quantity of turbine exhaust air remains for other uses such as heating water, raising steam, heat exchange with the compressed air and so on. This further serves to increase the overall thermodynamic efficiency of the system.
Essentially, the fed back combustion gas replaces turbine exhaust air which is surplus to the combustion process, i.e. contains excess oxygen which is not required for combustion. The remaining air in the combustion chamber is sufficient for complete combustion of the biomass fuel, i.e. the oxygen content of the combustion chamber is not limiting for combustion or the combustion temperature. By replacing the surplus turbine exhaust air with combustion gas, the overall volume of combustion gas generated is reduced compared with utilizing all of the turbine exhaust air, thereby allowing the dimensions of pipelines, cyclonic separators, filter systems, combustion gas fans and so on can be reduced. The thermal losses of the combustion gas is thereby reduced, and likewise electrical consumption of the combustion gas fan (if present) is reduced, yet further increasing the overall efficiency of the system.

The combustion gas returning means comprise an electrically-operated fan or electrically-operated compressor, which are simple and easy to control. In an embodiment, the combustion gas returning means comprise a Venturi pump, which is extremely simple and has no moving parts that may become fouled by smoke-laden combustion gases.
In an embodiment, the Venturi pump is arranged to be operated by turbine exhaust air, i.e. air which has passed through and left the turbine exhaust. Thereby, a portion of the turbine exhaust air is used to operate the Venturi pump, thereby eliminating the requirement for any auxiliary source of power or auxiliary source of compressed air to operate the combustion gas returning means.
In an embodiment, the combustion chamber comprises a grate, and the combustion gas returning means further comprise a plurality of combustion gas inlets situated above and/or below the grate. This permits the feedback of combustion gas into the combustion chamber have an optimised distribution.

In an embodiment, at least a portion of the combustion gas inlets comprise regulating valves arranged to regulate the flow of combustion gas into the combustion chamber. This enables the feedback of combustion gas into the combustion chamber to be further optimised and controlled.

In an embodiment, the plurality of combustion gas inlets are arranged so as to divide the combustion chamber into a plurality of zones, thereby permitting the combustion of the solid biomass to be optimised in each zone. Optionally, each zone is separated from its neighbouring zone or zones by a corresponding zone separation wall, i.e. a partition, which further serves to define the zones and optimise combustion in each zone. One or more of these zone separation wall or partition may extend from the bottom of the combustion chamber up to the grate, or may only extend part of the way thereto, and a further zone separation wall may be parallel to the plane of the grate and extend from an end wall of the combustion chamber towards the other end wall thereof.

In an embodiment, a second heat exchanger is provided for exchanging heat between combustion gases that were not fed back into the combustion chamber and water. This enables recovery of heat from the combustion gases and thereby to improve the thermodynamic efficiency of the system.

In an embodiment, the second heat exchanger is arranged directly adjacent to the first heat exchanger, which results in an extremely compact arrangement and improves heat transfer between the first and second heat exchangers due to them being adjacent and thereby in contact with each other. Optionally, the first heat exchanger is also arranged directly adjacent to the combustion chamber, likewise resulting in an extremely compact arrangement and improving heat transfer between the combustion chamber at the first heat exchanger.

In an embodiment, a third heat exchanger is provided for exchanging heat between turbine exhaust air and water, thereby recovering heat from the turbine exhaust air and thus increasing the overall thermodynamic efficiency of the complete system.

In an embodiment, a fourth heat exchanger is provided for exchanging heat between at least part of the turbine exhaust air and the compressed air (i.e. the compressed air supplied by the compressor to the first heat exchanger), thereby recovering a proportion of the heat from the turbine exhaust air and preheating the compressed air before it enters the first heat exchanger, and thereby improving the overall thermodynamic efficiency of the complete system.

In an embodiment, the gas turbine system further comprises an electrical generator, such as a dynamo or an alternator, operated by said gas turbine. In consequence, electrical power is generated that can be used to power electrical components of the gas turbine system, or for external uses. The object of the invention is further attained by a method of operating a gas turbine according to claim 12. This results in a simple method in which varying the proportion of the combustion gases fed back into the combustion chamber between 30% and 60% enables the combustion temperature to be controlled by the amount of colder fed-back combustion gas and thereby to achieve the desired temperature of combustion gases in the first heat exchanger. Furthermore, the feedback of combustion gas permits to increase the volumetric flow of combustion gas passing through the first heat exchanger, which improves the heat transfer in the first heat exchanger, improving the total thermodynamic efficiency of the system, without increasing the burning temperature and thus the temperature of the combustion gases due to larger volume flows of air. Still further, in the case in which the air for combustion in the combustion chamber is supplied by utilising a proportion of the turbine exhaust air, since a portion of the turbine exhaust air has been replaced by combustion gas, a quantity of turbine exhaust air remains for other uses such as heating water, raising steam, heat exchange with the compressed air and so on. This further serves to increase the overall thermodynamic efficiency of the system.
Essentially, the fed back combustion gas replaces turbine exhaust air which is surplus to the combustion process, i.e. contains excess oxygen which is not required for combustion. The remaining air in the combustion chamber is sufficient for complete combustion of the biomass fuel, i.e. the oxygen content of the combustion chamber is not limiting for combustion all the combustion temperature. By replacing the surplus turbine exhaust air with combustion gas, the overall volume of combustion gas generated is reduced, thereby allowing the dimensions of pipelines, cyclonic separators, filter systems, combustion gas fans and so on can be reduced. The thermal losses of the combustion gas is reduced, and likewise electrical consumption of the combustion gas fan (if present) is reduced, yet further increasing the overall efficiency of the system.

In an embodiment, the combustion gases are returned to the combustion chamber by being introduced into the combustion chamber by a plurality of combustion gas inlet situated above and/or below a grate. This permits the feedback of combustion gas into the combustion chamber to have an optimised distribution.

In an embodiment, the combustion chamber is divided into a plurality of zones, and the combustion gases returned to the combustion chamber in each of these zones which are optionally separated from each other by at least one zone separation wall or partition. This enables the fed back combustion gas to be returned to the combustion chamber in such a manner that the combustion of the solid biomass in each zone can be optimised and controlled, particularly in the case when at least part of the combustion gas flow is controlled by the above-mentioned valves.

In an embodiment, the method further comprises a step of exchanging heat between the combustion gases which were not returned to the combustion chamber and water. This enables recovery of heat from the combustion gases and thereby to improve the thermodynamic efficiency of the system.

In an embodiment, the method further comprises the step of exchanging heat between turbine exhaust air and water. This enables recovery of heat from the turbine exhaust air and thereby to improve the thermodynamic efficiency of the system.

In an embodiment, the method further comprises the step of exchanging heat between at least a portion of the turbine exhaust air and the compressed air supplied by the compressor, thereby recovering a proportion of the heat from the turbine exhaust air and preheating the compressed air before it enters the first heat exchanger, and thereby improving the overall thermodynamic efficiency of the complete system.
Finally, the invention relates to a method of generating electrical power comprising operating a gas turbine according to any of the above-mentioned methods, and operating an electrical generator based on operation of the gas turbine, i.e. by utilising the turbine rotation to provide a source of work for the generator, so as to generate electrical power. Thereby, electrical power is produced which can then be used for powering internal electrical components of the gas turbine system and/or for powering external systems.

Non-limiting example embodiments of the present invention are illustrated in the appended figures, which show:
Fig. 1 - schematically, a first embodiment of the present invention;
Fig. 2 - schematically, a second embodiment of the present invention;
Fig. 3 - schematically, a third embodiment of the present invention;
Fig. 4 - schematically, a view of a combustion chamber utilised in an embodiment of the present invention.

In the figures, single lines are used to illustrate the flow of air, double lines are used to illustrate the flow of combustion gases, triple lines are used to illustrate the movement of biomass fuel and solid residues thereof, and wavy single lines are used to illustrate the flow of water. Furthermore, any temperatures cited are merely indicative of values attained in practice and are not to be construed as limiting in any way.

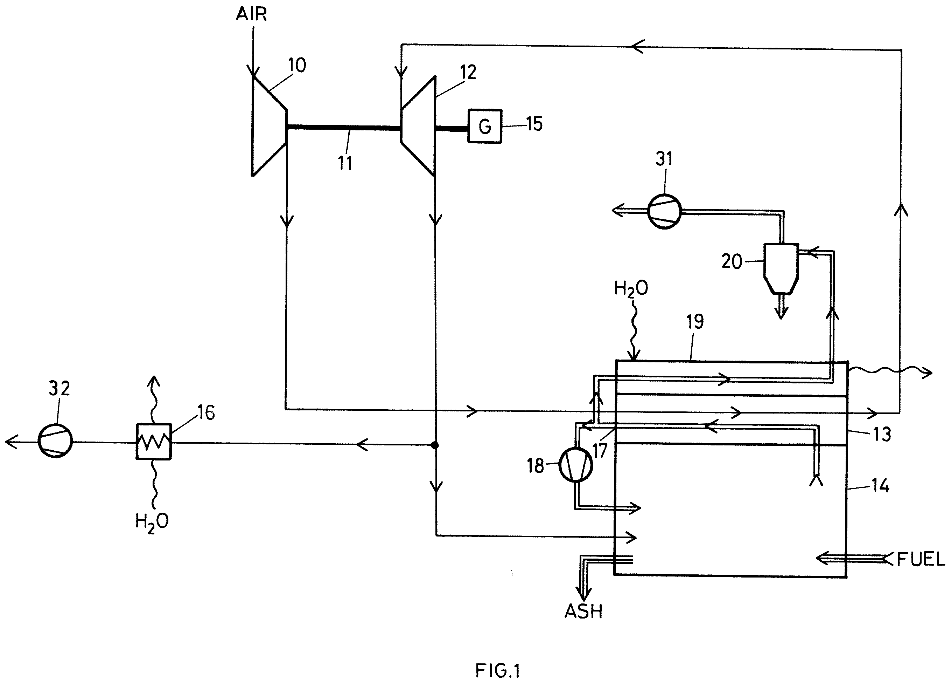

Figure 1 illustrates schematically a first embodiment of the present invention. Ambient air is compressed by a compressor 10 driven by the shaft 11 of gas turbine 12. Compressor 10 compresses the air, thereby raising its temperature to approximately 160-200°C at the compressor outlet. This compressed air is fed to a first heat exchanger 13 situated adjacent to, indeed mounted on, combustion chamber 14. Mounting the first heat exchanger 13 directly on the combustion chamber 14 reduces heat losses since some of the heat that might otherwise be wasted by being lost to the surroundings is transferred by conduction through the walls of the combustion chamber 14 to the first heat exchanger 13. Naturally, other arrangements of the first heat exchanger 13 are possible. First heat exchanger 13 has a primary side through which combustion gas passes, and a secondary side through which compressed air passes. Each side has an inlet and outlet, and the heat exchanger is operated in contra flow, although parallel flow is also possible. First heat exchanger 13 may be of any known type.

After leaving heat exchanger 13, the compressed air has a temperature in the range of 700-800°C (for instance of approximately 750°C) and is fed to the high-pressure side of gas turbine 12, causing the turbine to operate. The shaft of the gas turbine 12 is connected to the shaft of the compressor 10, and also to a generator 15 for generating electrical power.
Upon leaving the exhaust of the gas turbine 12, this turbine exhaust air has a temperature in the range of 450-550°C (for instance of approximately 500°C), and a portion thereof is introduced into the combustion chamber 14 as burning air. It should be noted that in the embodiment of figure 1, no extra source of air is provided: all the air utilised for burning the solid biomass is turbine exhaust air: no extra source of fresh air is provided. The remaining portion of the turbine exhaust air is fed to further, third, heat exchanger 16, in which water is heated. After passing through further heat exchanger 16, the air has a temperature of about 50-100°C (depending on return water temperature) and can be used directly for drying or preheating biomass fuel, or for building heating. As an alternative to further heat exchanger 16, the turbine exhaust air may be used to run a micro Organic Rankine Cycle system for electrical and thermal energy, to run a Stirling motor, or for raising steam.
Combustion chamber 14 is provided with a grate (not illustrated in figure 1) which may be of any convenient type, for instance the UTSR 1200 as commercialised by the Applicant. Biomass fuel is fed into combustion chamber 14 and is burnt therein, thereby producing combustion gases which are fed into the primary side of first heat exchanger 13 at a temperature in the range 750-900°C (for instance approximately 850°C). Heat is exchanged in first heat exchanger 13 between the combustion gases and the compressed air, raising the temperature of the compressed air to within the range 700-800°C (for instance approximately 750°C) and reducing the temperature of the combustion gases to within the range 180-300°C (for instance approximately 280°C) at primary side outlet 17. A proportion of the combustion gases at primary side outlet 17 are actively fed back into combustion chamber 14 via blower 18 constituting combustion gas returning means. Z According to the invention the blower (18) is an electrically-powered fan or compressor Blower 18 feeds between 30% and 60% of the combustion gas exiting the primary side of the first heat exchanger 13 back into the combustion chamber 14. This proportion may however also be 40-60%, and as practiced today may be substantially 50%. By adjusting this proportion, the temperature of the combustion gases can be adjusted as desired so as to optimise efficiency, since the fed back combustion gas is cooler than the turbine exhaust air (180-300°C compared with 450-550°C) and thus will tend to limit combustion temperature in the combustion chamber 14 by cooling the combustion chamber compared with pure turbine exhaust gas. Furthermore, compared with no feedback of combustion gas, the volume of combustion gas passing through the first heat exchanger 13 can be significantly increased without significantly increasing the combustion temperature, thus improving heat transfer in the first heat exchanger 13. The present arrangement thus serves to improve heat exchange by increasing the combustion gas volume without increasing the air (and thus oxygen) flow into the combustion chamber.
The combustion gas not fed back into the combustion chamber 14 enters optional second heat exchanger 19 mounted adjacent to - indeed directly on - the first heat exchanger 13, which improves heat transfer since some of the heat that might otherwise be lost to the surroundings is transferred through the walls of the first heat exchanger 13 to the second heat exchanger 19. Naturally, other arrangements of the second heat exchanger 19 are possible. In second heat exchanger 19, the combustion gases can be cooled from approximately 280°C (or in the range 180-300°C) down to approximately 130°C (or in the range 120-140°C), while water entering the second heat exchanger is heated up to approximately 95°C. Upon leaving the second heat exchanger 19, the combustion gas passes through a cyclonic separator 20 to remove particulate matter, and is then exhausted to atmosphere. Cyclonic separator 20, if not required, may be omitted.
The combustion gas output from cyclonic separator 20 finally passes through combustion gas fan 31, which serves to assist in drawing the combustion gases through the system. Likewise, turbine exhaust fan 32 is situated downstream of third heat exchanger 16, serving to assist in drawing the turbine exhaust gas through the system. If not required, either or both of combustion gas than 31 and turbine exhaust gas fan 32 may be omitted.

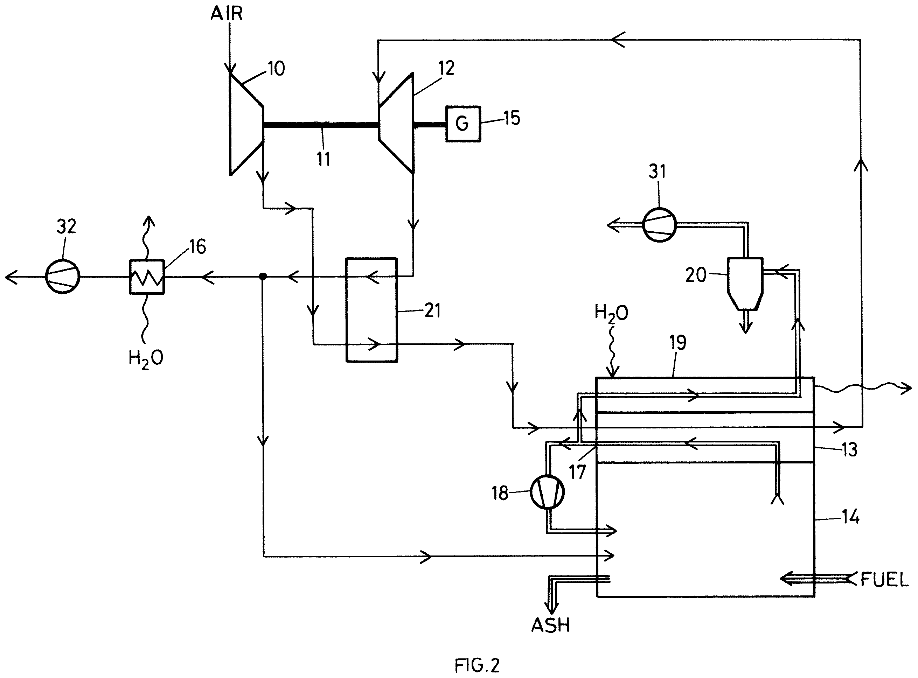

Figure 2 illustrates schematically a second embodiment of the present invention, which differs from the embodiment of figure 1 in that an fourth heat exchanger 21 is provided to exchange heat between turbine exhaust air and the compressed air, and thereby to raise the temperature of the compressed air before it enters the first heat exchanger 13, thereby increasing the overall thermodynamic efficiency of the system. In the embodiment of figure 2, a portion of the turbine exhaust air is split off after passing through the fourth heat exchanger 21 and is then fed into the combustion chamber 14 as burning air. The remainder of the turbine exhaust air passes through further heat exchanger 16 e.g. to heat water as above. Since all of the turbine exhaust air passes through fourth heat exchanger 21, the maximum amount of heat is transferred to the compressed air.

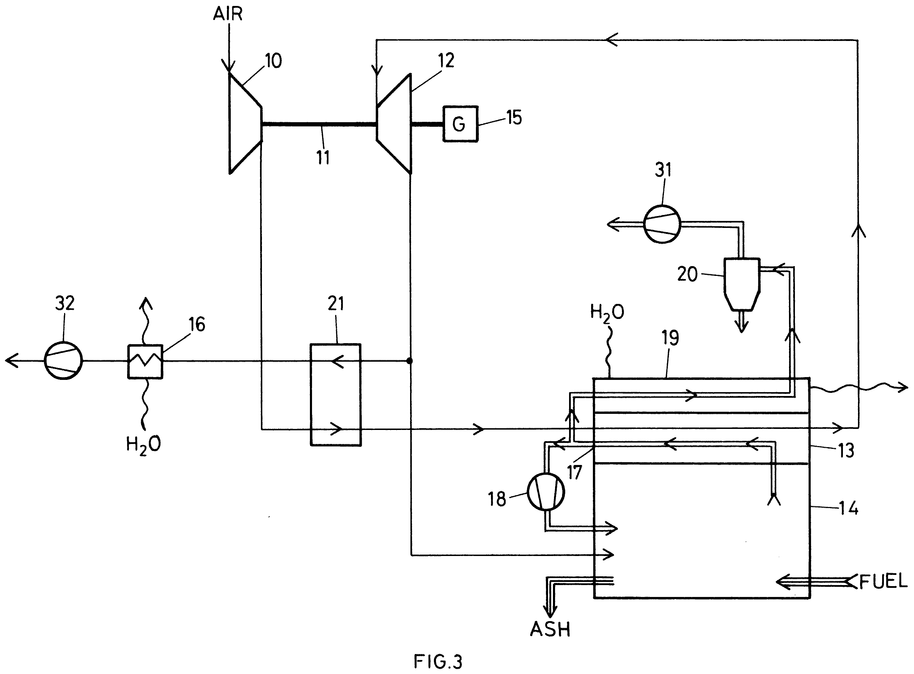

Figure 3 illustrates a third embodiment of the present invention, which differs from the embodiment of figure 2 in that the portion of the turbine exhaust air split off for use in the combustion chamber 14 as burning air is split off before entering the fourth heat exchanger 21, resulting in turbine exhaust at a higher temperature than in the embodiment of figure 2 entering the combustion chamber 14.

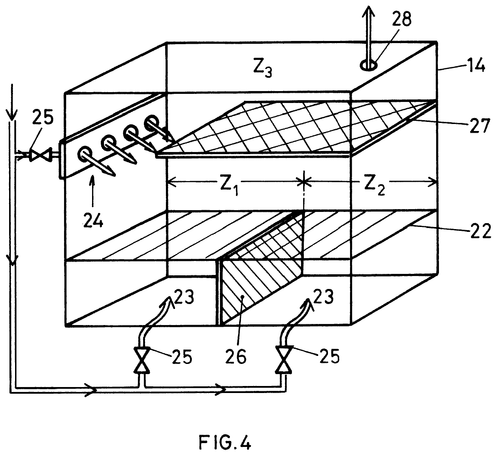

Figure 4 illustrates schematically a combustion chamber suitable for use in all of the above mentioned embodiments. As is conventional, the combustion chamber comprises a grate 22 which may be of any known type, such as the UTSR 1200 as commercialised by the Applicant. Inlets and outlets for biomass, burning air, and ash are not illustrated, and are conventional. As illustrated, combustion gas outlet 28 is situated in the upper face of combustion chamber 14 and towards the right-hand end wall of combustion chamber 14 in the view of fig. 4. Combustion gas outlet 28 may, however, be differently located as required. A plurality of combustion gas inlets 23, 24 are provided below and above the grate respectively, and are provided with regulatable valves 25. In the illustrated embodiment, each of the combustion gas inlets 23 situated under the grate 22 possesses its own regulatable valve 25, and combustion gas inlet 24 situated above the grate in or directly before combustion end zone of combustion chamber 14 possess a common regulatable valve 25. These combustion gas inlets 23, 24 are used for introducing combustion gas into the combustion chamber 14 in a plurality of zones Z₁, Z₂, Z₃ so as to be able to adjust and optimise the burning of the biomass in different regions of the combustion chamber 14 so as to optimise the fuel combustion. The zones Z₁, Z₂ and Z₃ are defined by the number and position of the combustion gas inlets 23, 24, and the flow rates of combustion gas determined by the valves 25, or by the size of the inlets 23, 24 if valves are not present. Zone separating wall 26 separates zone Z₁ from zone Z₂, however this may be omitted if not required. A further zone separating wall 27 separates zone Z₃ in the upper portion of combustion chamber 14 from zones Z₁ and Z₂ in the lower portion of combustion chamber 14. Likewise, this further zone separating wall 27 may be omitted if not required. In the figure, zone Z₁ comprises one combustion gas inlet 23 (which is illustrated schematically in figure 4 and may comprise a group of individual inlets) below the grate 22, and a combustion gas inlet 24 situated in or directly before the combustion end zone Z₃ of the combustion chamber 14, here illustrated schematically as comprising four individual inlets, however this number may be for instance eight individual inlets or any other convenient number. Zone Z₂ on the other hand merely comprises one combustion gas inlet 23 below the grate 22, which again may comprise a group of individual inlets arranged as convenient. Naturally, any desired arrangement of combustion gas inlets 23, 24 in each zone is possible.
As a result, different flow rates of combustion gas can be introduced into each zone so as to optimise the combustion in each zone Z₁, Z₂, Z₃.
Although a total of three combustion gas inlets 23, 24 (two combustion gas inlets 23 underneath the grate 22 and one combustion gas inlet 24 above the grate 22) and three zones Z₁, Z₂, Z₃ are illustrated in figure 4, the number of zones (e.g. 2, 3, 4, 5, 6 or more, with or without corresponding zone separating walls) and the number of combustion gas inlets can be chosen at will. Likewise, valves 25 may be dispensed with, or may be only provided for a certain number of combustion gas inlets 23, 24. Some or all of the combustion gas inlets may also be situated on the sides, ends, top or bottom of combustion chamber 14, above and/or below the grate 22 as required.

Although the invention has been described in terms of specific embodiments, variations therefrom are possible without departing from the scope of the invention as defined by the appended claims.

## Claims

1. Gas turbine system comprising:
- a combustion chamber (14) for burning solid biomass;
- a compressor (10) for supplying compressed air;
- a first heat exchanger (13) for exchanging heat between the compressed air and combustion gases generated by burning solid biomass in the presence of air in the combustion chamber, the first heat exchanger (13) having a primary-side for the combustion gases and a secondary-side for the compressed air, each side having an inlet and outlet;
- a gas turbine (12) arranged to be operated by compressed air leaving the secondary-side outlet of the first heat exchanger (13), wherein the air leaving the gas turbine (12) is fed to the combustion chamber (14);
**characterised by** further comprising combustion gas returning means (18), wherein the combustion gas returning means (18) comprise an electrically-operated fan or an electrically-operated compressor, by which the proportion of the combustion gases fed back from the primary side outlet of the first heat exchanger (13) to the combustion chamber (14) is variable between 30-60%.

2. Gas turbine system according to any of claim 1 wherein the combustion chamber (14) comprises a grate (22), and the combustion gas returning means (18) further comprise a plurality of combustion gas inlets (23, 24) situated above and/or below the grate (22).

3. Gas turbine system according to the preceding claim, wherein at least a portion of the combustion gas inlets (23, 24) comprise a regulating valve (25) for regulating the flow of combustion gas into the combustion chamber (14).

4. Gas turbine system according to claim 2 or 3, wherein the plurality of combustion gas inlets (23, 24) are arranged so as to divide the combustion chamber (14) into a plurality of zones (Z₁, Z₂, Z₃), and wherein optionally each zone (Z₁, Z₂, Z₃) is separated from its adjacent zone (Z₂, Z₁, Z₃) by a corresponding zone separation wall (26, 27).

5. Gas turbine system according to any of claims 1-4, wherein a second heat exchanger (19) is provided for exchanging heat between combustion gases not returned to the combustion chamber and water.

6. Gas turbine system according to the preceding claim, wherein the second heat exchanger (19) is arranged directly adjacent to the first heat exchanger (13), the first heat exchanger (13) being optionally arranged directly adjacent to the combustion chamber (14).

7. Gas turbine system according to any of claims 1-6 wherein a third heat exchanger (16) is provided for exchanging heat between turbine exhaust air and water.

8. Gas turbine system according to any of claims 1-7, wherein a fourth heat exchanger (21) is provided for exchanging heat between at least part of the turbine exhaust air and said compressed air.

9. Gas turbine system according to any of claims 1-8 wherein said gas turbine system further comprises an electrical generator (15) arranged to be operated by said gas turbine (12).

10. Method of operating a gas turbine (12) comprising the steps of:
- feeding solid biomass and air into a combustion chamber (14) ;
- providing a gas returning means (18) in the form of an electrically-operated fan or an electrically-operated compressor;
- burning the solid biomass in the combustion chamber (14) so as to generate combustion gases;
- exchanging heat between the combustion gases and compressed air supplied by a compressor (10), thereby heating the compressed air, then subsequently adjusting the proportion of the combustion gases fed back to the combustion chamber (14) between 30-60% and returning said portion of the combustion gases to the combustion chamber (14) by means of the electrically-operated fan or compressor;
- feeding the thus heated compressed air to an inlet of a gas turbine (12)
- feeding the air leaving the gas turbine (12) to the combustion chamber (14).

11. Method according to the preceding claim, wherein the combustion gases returned to the combustion chamber (14) are introduced into the combustion chamber (14) by a plurality of combustion gas inlets (23, 24) situated above and/or below a grate (22).

12. Method according to the preceding claim, wherein the combustion chamber (14) is divided into a plurality of zones (Z₁, Z₂, Z₃), each zone (Z₁, Z₂, Z₃) being separated from its adjacent zone (Z₂, Z₁, Z₃) by a corresponding zone separation wall (26, 27), and wherein the combustion gas is returned to the combustion chamber in each of said zones (Z₁, Z₂, Z₃).

13. Method according to any of claims 10-12, further comprising the step of exchanging heat between the combustion gases which were not returned to the combustion chamber (14) and water.

14. Method according to any of claims 10-13, further comprising the step of exchanging heat between turbine exhaust air and water.

15. Method according to any of claims 10-14, further comprising the step of exchanging heat between at least a portion of the turbine exhaust air and the said compressed air.

16. Method of generating electrical power comprising operating a gas turbine (12) according to the method of any of claims 10-15, and operating an electrical generator (15) based on operation of the gas turbine (12) so as to generate electrical power.

## Patentansprüche

1. Gasturbinensystem, umfassend:
- eine Brennkammer (14) zum Verbrennen von fester Biomasse;
- einen Verdichter (10) zum Zuführen von Druckluft;
- einen ersten Wärmetauscher (13) zum Austauschen von Wärme zwischen der Druckluft und den Verbrennungsgasen, die durch Verbrennen von fester Biomasse im Beisein von Luft in der Brennkammer erzeugt werden, wobei der erste Wärmetauscher (13) eine primäre Seite für die Verbrennungsgase und eine sekundäre Seite für die Druckluft aufweist, wobei jede Seite einen Einlass und Auslass aufweist;
- eine Gasturbine (12), die angeordnet ist, um durch Druckluft betrieben zu werden, die den Auslass der sekundären Seite des ersten Wärmetauschers (13) verlässt, wobei die Luft, die die Gasturbine (12) verlässt, der Brennkammer (14) zugeführt wird;
**dadurch gekennzeichnet, dass** es ferner ein Verbrennungsgasrückführmittel (18) umfasst, wobei das Verbrennungsgasrückführmittel (18) einen elektrisch betriebenen Lüfter oder einen elektrisch betriebenen Verdichter umfasst, durch den der Anteil der Verbrennungsgase, der vom Auslass der primären Seite des ersten Wärmetauschers (13) zurück zur Brennkammer (14) zugeführt wird, zwischen 30-60 % variabel ist.

2. Gasturbinensystem nach Anspruch 1, wobei die Brennkammer (14) einen Rost (22) umfasst und das Verbrennungsgasrückführmittel (18) ferner eine Vielzahl von Verbrennungsgaseinlässen (23, 24) umfasst, die sich über und/oder unter dem Rost (22) befinden.

3. Gasturbinensystem nach dem vorhergehenden Anspruch, wobei mindesten ein Abschnitt der Verbrennungsgaseinlässe (23, 24) ein Regelventil (25) zum Regulieren des Stroms von Verbrennungsgas in die Brennkammer (14) umfasst.

4. Gasturbinensystem nach Anspruch 2 oder 3, wobei die Vielzahl von Verbrennungsgaseinlässen (23, 24) derart angeordnet ist, dass sie die Brennkammer (14) in eine Vielzahl von Zonen (Z₁, Z₂, Z₃) unterteilt, und wobei jede Zone (Z₁, Z₂, Z₃) optional von ihrer benachbarten Zone (Z₂, Z₁, Z₃) durch eine entsprechende Zonentrennwand (26, 27) getrennt ist.

5. Gasturbinensystem nach einem der Ansprüche 1-4, wobei ein zweiter Wärmetauscher (19) zum Austauschen von Wärme zwischen Verbrennungsgasen, die nicht zur Brennkammer zurückgeführt werden, und Wasser vorgesehen ist.

6. Gasturbinensystem nach dem vorhergehenden Anspruch, wobei der zweite Wärmetauscher (19) direkt benachbart zum ersten Wärmetauscher (13) angeordnet ist, wobei der erste Wärmetauscher (13) optional direkt benachbart zur Brennkammer (14) angeordnet ist.

7. Gasturbinensystem nach einem der Ansprüche 1-6, wobei ein dritter Wärmetauscher (16) zum Austauschen von Wärme zwischen Turbinenauslassluft und Wasser vorgesehen ist.

8. Gasturbinensystem nach einem der Ansprüche 1-7, wobei ein vierter Wärmetauscher (21) zum Austauschen von Wärme zwischen mindestens einem Teil der Turbinenauslassluft und der Druckluft vorgesehen ist.

9. Gasturbinensystem nach einem der Ansprüche 1-8, wobei das Gasturbinensystem ferner einen elektrischen Generator (15) umfasst, der angeordnet ist, um von der Gasturbine (12) betrieben zu werden.

10. Verfahren zum Betreiben einer Gasturbine (12), die folgenden Schritte umfassend:
- Zuführen von fester Biomasse und Luft in eine Brennkammer (14);
- Bereitstellen eines Gasrückführungsmittels (18) in der Form eines elektrisch betriebenen Lüfters oder eines elektrisch betriebenen Verdichters;
- Verbrennen der festen Biomasse in der Brennkammer (14), um Verbrennungsgase zu erzeugen;
- Austauschen von Wärme zwischen den Verbrennungsgasen und der Druckluft, die von einem Verdichter (10) zugeführt wird, dadurch Erwärmen der Druckluft, dann anschließend Anpassen des Anteils der Verbrennungsgase, die zurück zur Brennkammer (14) zugeführt werden, zwischen 30-60 % und Zurückführen des Anteils der Verbrennungsgase zur Brennkammer (14) mittels des elektrisch betriebenen Lüfters oder Verdichters;
- Zuführen der somit erwärmten Druckluft zu einem Einlass einer Gasturbine (12)
- Zuführen der Luft, die die Gasturbine (12) verlässt, zur Brennkammer (14).

11. Verfahren nach dem vorhergehenden Anspruch, wobei die Verbrennungsgase, die zur Brennkammer (14) zurückgeführt wurden, durch eine Vielzahl von Verbrennungsgaseinlässen (23, 24), die sich über und/oder unter einem Rost (22) befindet, in die Brennkammer (14) eingeführt werden.

12. Verfahren nach dem vorhergehenden Anspruch, wobei die Brennkammer (14) in eine Vielzahl von Zonen (Z₁, Z₂, Z₃) unterteilt ist, wobei jede Zone (Z₁, Z₂, Z₃) von ihrer benachbarten Zone (Z₂, Z₁, Z₃) durch eine entsprechende Zonentrennwand (26, 27) getrennt ist, und wobei das Verbrennungsgas in jeder der Zonen (Z₁, Z₂, Z₃) zur Brennkammer zurückgeführt wird.

13. Verfahren nach einem der Ansprüche 10-12, ferner umfassend den Schritt des Austauschens von Wärme zwischen den Verbrennungsgasen, die nicht zur Brennkammer (14) zurückgeführt wurden, und Wasser.

14. Verfahren nach einem der Ansprüche 10-13, ferner umfassend den Schritt des Austauschens von Wärme zwischen der Turbinenauslassluft und Wasser.

15. Verfahren nach einem der Ansprüche 10-14, ferner umfassend den Schritt des Austauschens von Wärme zwischen mindestens einem Teil der Turbinenauslassluft und der Druckluft.

16. Verfahren zum Erzeugen von elektrischer Energie, umfassend Betreiben einer Gasturbine (12) gemäß dem Verfahren nach einem der Ansprüche 10-15 und Betreiben eines elektrischen Generators (15) auf Grundlage des Betriebs der Gasturbine (12), um elektrische Energie zu erzeugen.

## Revendications

1. Système de turbine à gaz comprenant :
- une chambre de combustion (14) pour brûler de la biomasse solide ;
- un compresseur (10) pour fournir de l'air comprimé ;
- un premier échangeur thermique (13) pour échanger de la chaleur entre l'air comprimé et les gaz de combustion générés par la combustion de la biomasse solide en présence d'air dans la chambre de combustion, le premier échangeur thermique (13) ayant un côté primaire pour les gaz de combustion et un côté secondaire pour l'air comprimé, chaque côté ayant une entrée et une sortie ;
- une turbine à gaz (12) agencée pour être utilisée par l'air comprimé quittant la sortie côté secondaire du premier échangeur thermique (13), l'air quittant la turbine à gaz (12) étant amené dans la chambre de combustion (14) ;
**caractérisé en ce qu'**il comprend en outre des moyens de retour des gaz de combustion (18), dans lequel les moyens de retour des gaz de combustion (18) comprennent un ventilateur à commande électrique ou un compresseur à commande électrique, à l'aide duquel la proportion des gaz de combustion ramenés depuis la sortie côté primaire du premier échangeur thermique (13) vers la chambre de combustion (14) varie entre 30 et 60 %.

2. Système de turbine à gaz selon la revendication 1, dans lequel la chambre de combustion (14) comprend une grille (22), et les moyens de retour des gaz de combustion (18) comprennent en outre une pluralité d'entrées de gaz de combustion (23, 24) situées au-dessus et/ou en dessous de la grille (22).

3. Système de turbine à gaz selon la revendication précédente, dans lequel au moins une partie des entrées de gaz de combustion (23, 24) comprennent une vanne de régulation (25) pour réguler le flux de gaz de combustion dans la chambre de combustion (14).

4. Système de turbine à gaz selon la revendication 2 ou 3, dans lequel la pluralité d'entrées de gaz de combustion (23, 24) sont disposées de sorte à diviser la chambre de combustion (14) en une pluralité de zones (Z₁, Z₂, Z₃), et dans lequel en option chaque zone (Z₁, Z₂, Z₃) est séparée de sa zone adjacente (Z₂, Z₁, Z₃) par une paroi de séparation de zone correspondante (26, 27).

5. Système de turbine à gaz selon l'une des revendications 1 à 4, dans lequel il est prévu un deuxième échangeur thermique (19) pour échanger de la chaleur entre les gaz de combustion non ramenés vers la chambre de combustion et l'eau.

6. Système de turbine à gaz selon la revendication précédente, dans lequel le deuxième échangeur thermique (19) est disposé directement de façon adjacente au premier échangeur thermique (13), le premier échangeur thermique (13) étant en option agencé directement de façon adjacente à la chambre de combustion (14).

7. Système de turbine à gaz selon l'une des revendications 1 à 6, dans lequel il est prévu un troisième échangeur thermique (16) pour échanger de la chaleur entre l'air évacué de la turbine et l'eau.

8. Système de turbine à gaz selon l'une des revendications 1 à 7, dans lequel il est prévu un quatrième échangeur thermique (21) pour échanger de la chaleur entre au moins une partie de l'air évacué de la turbine et ledit air comprimé.

9. Système de turbine à gaz selon l'une des revendications 1 à 8, dans lequel ledit système de turbine à gaz comprend en outre un générateur électrique (15) agencé pour être utilisé par ladite turbine à gaz (12).

10. Procédé d'utilisation d'une turbine à gaz (12) comprenant les étapes consistant à :
- amener de la biomasse solide et de l'air dans une chambre de combustion (14) ;
- fournir des moyens de retour de gaz (18) sous la forme d'un ventilateur à commande électrique ou d'un compresseur à commande électrique ;
- brûler la biomasse solide dans la chambre de combustion (14) de façon à générer des gaz de combustion ;
- échanger de la chaleur entre les gaz de combustion et l'air comprimé fourni par un compresseur (10), faisant ainsi chauffer l'air comprimé, puis régler la proportion des gaz de combustion ramenés dans la chambre de combustion (14) entre 30 et 60 % et ramener ladite proportion des gaz de combustion dans la chambre de combustion (14) par le biais du ventilateur à commande électrique ou du compresseur ;
- amener l'air comprimé ainsi chauffé vers une entrée d'une turbine à gaz (12)
- amener l'air quittant la turbine à gaz (12) vers la chambre de combustion (14).

11. Procédé selon la revendication précédente, dans lequel les gaz de combustion ramenés dans la chambre de combustion (14) sont introduits dans la chambre de combustion (14) par une pluralité d'entrées de gaz de combustion (23, 24) situées au-dessus et/ou en dessous d'une grille (22).

12. Procédé selon la revendication précédente, dans lequel la chambre de combustion (14) est divisée en une pluralité de zones (Z₁, Z₂, Z₃), chaque zone (Z₁, Z₂, Z₃) étant séparée de sa zone adjacente (Z₂, Z₁, Z₃) par une paroi de séparation de zone correspondante (26, 27), et dans lequel le gaz de combustion est ramené vers la chambre de combustion dans chacune desdites zones (Z₁, Z₂, Z₃).

13. Procédé selon l'une des revendications 10 à 12, comprenant en outre l'étape consistant à échanger de la chaleur entre les gaz de combustion qui n'ont pas été ramenés vers la chambre de combustion (14) et l'eau.

14. Procédé selon l'une des revendications 10 à 13, comprenant en outre l'étape consistant à échanger de la chaleur entre l'air évacué de la turbine et l'eau.

15. Procédé selon l'une des revendications 10 à 14, comprenant en outre l'étape consistant à échanger de la chaleur entre au moins une partie de l'air évacué de la turbine et ledit air comprimé.

16. Procédé de production d'une énergie électrique consistant à faire fonctionner une turbine à gaz (12) selon le procédé de l'une des revendications 10 à 15 et à faire fonctionner un générateur électrique (15) sur la base du fonctionnement de la turbine à gaz (12) pour produire une énergie électrique.
